# FASCICULE DE BREVET EUROPEEN

(11) **EP 0 541 472 B1**
(45) Date de publication et mention de la délivrance du brevet: **26.07.1995**
(21) Numéro de dépôt: 92470030.5
(22) Date de dépôt: 02.11.1992
(51) Int. Cl.: F16L 21/08, F16L 21/04

(54) **Joint verrouillé pour canalisations**
Verriegelte Verbindung für Rohrleitungen
Locked joint for canalisations

(30) Priorité: 07.11.1991 FR 9113753
(43) Date de publication de la demande: 12.05.1993
(73) Titulaire: PONT-A-MOUSSON S.A., 54017 Nancy (FR)
(72) Inventeur: Percebois, Alain, F-54700 Blenod les Pont-A-Mousson (FR); Remy, André, F-54700 Blenod les Pont-A-Mousson (FR); Vitel, Jean-Pierre, F-54470 Thiaucourt-Regnieville (FR)
(74) Mandataire: Puit, Thierry

(56) Documents cités:
- EP-A- 0 334 380
- EP-A- 0 455 490
- DE-A- 2 754 984
- DE-B- 1 250 214
- FR-A- 79 111

## Description

La présente invention est relative à un joint verrouillé entre le bout uni d'un premier élément tubulaire et l'emboîtement d'un second élément tubulaire, du type comprenant une garniture d'étanchéité logée dans l'emboîtement, une couronne de verrouillage à dents internes entourant le bout uni, et un dispositif à contre-bride muni de moyens d'accrochage sur l'emboîtement et adapté pour assurer la retenue anti-recul de la couronne de verrouillage. Elle s'applique notamment à la pose des canalisations en fonte ductile.

Quel que soit le type de garniture utilisée, à compression radiale pour les joints dits automatiques ou à compression axiale pour les joints dits mécaniques, les joints verrouillés de ce type doivent permettre de maintenir à une très faible valeur le recul du bout uni lors de la mise en pression de la canalisation, tout en étant faciles à mettre en oeuvre.

De plus, afin que le verrouillage de la jonction tubulaire puisse être assuré de manière efficace et durable, et afin que la durée de vie des éléments tubulaires ne soit pas affectée, il convient de protéger contre la corrosion les zones de contact entre la couronne de verrouillage et les pièces métalliques qui l'entourent.

L'invention a pour but de fournir un joint verrouillé remplissant simultanément ces trois conditions.

A cet effet, l'invention a pour objet un joint verrouillé du type précité, caractérisé en ce que un collier en élastomère, surmoulé sur la couronne de verrouillage, enrobe celle-ci de tous côtés sauf sur sa face intérieure dentée, ledit collier comprenant, vers l'avant, au moins une lèvre élastique qui est interposée, dans le sens longitudinal, entre la couronne de verrouillage et la face arrière d'un anneau de butée rigide entourant le bout uni.

Suivant d'autres caractéristiques :
- le collier se termine, vers l'arrière, par une partie arrière cylindrique reliée à la lèvre élastique par l'intermédiaire d'un voile de liaison constituant un revêtement de la face radialement extérieure de la couronne de verrouillage ;
- la lèvre élastique et la partie arrière cylindrique sont dentées intérieurement au contact du bout uni et enserrent élastiquement celui-ci ;
- le collier comprend, vers l'avant, deux lèvres divergentes ;
- un voile radial, en saillie sur la lèvre élastique, prolonge celle-ci en direction radiale extérieure ;
- la lèvre élastique est un jonc en élastomère à alvéoles axiaux ;
- la partie arrière cylindrique du collier constitue une protubérance de préhension en saillie axiale au-delà de la contre-bride.

Lorsque le joint est à garniture d'étanchéité à compression axiale, la compression axiale étant assurée par le dispositif à contrebride, de façon avantageuse, le dispositif à contre-bride comprend d'une part un anneau de compression qui présente une face avant s'appuyant sur la garniture et une face arrière, cet anneau constituant ledit anneau de butée, et d'autre part une contre-bride munie desdits moyens d'accrochage et présentant une face avant de poussée qui coopère avec la face arrière de l'anneau de compression et une face interne de retenue de la couronne de verrouillage qui est convergente vers l'arrière.

Lorsque le joint est à garniture d'étanchéité à compression radiale, la compression radiale étant assurée par l'insertion du bout uni dans l'emboîtement, de façon avantageuse, ledit anneau de butée est un anneau-entretoise pris en sandwich entre une face radiale de l'emboîtement et la face avant de la contrebride.

Quelques exemples de réalisation de l'invention vont maintenant être décrits en regard des dessins annexés, sur lesquels :
- la Fig. 1 est une demi-vue en coupe axiale d'un joint mécanique verrouillé conforme à l'invention, en cours de montage ;
- les Fig. 2 et 3 sont des vues analogues de deux variantes, à l'état monté ;
- la Fig. 4 est une vue analogue d'un autre mode de réalisation du joint mécanique verrouillé suivant l'invention, également à l'état monté ; et
- la Fig. 5 est une vue analogue d'un joint automatique verrouillé suivant l'invention.

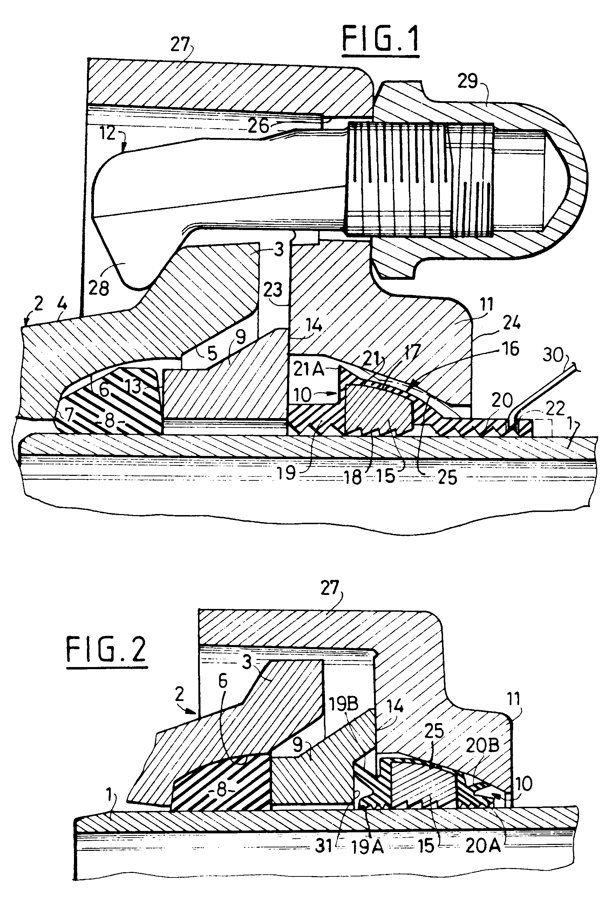

On a représenté à la Fig. 1 un joint verrouillé entre le bout uni 1 d'un premier élément tubulaire et l'emboîtement 2 d'un second élément tubulaire. Les deux éléments tubulaires peuvent être en particulier deux tuyaux identiques successifs d'une canalisation, notamment en fonte ductile, chaque tuyau comportant un bout uni 1 à une extrémité et un emboîtement 2 à son autre extrémité. Pour les besoins de la présente description, on supposera que, comme représenté, les deux éléments tubulaires ont un axe commun horizontal.

Le bout uni 1 est extérieurement cylindrique, tandis que l'emboîtement 2 présente extérieurement, à partir de son entrée, une collerette 3 en saillie radiale puis une surface convergente 4. Intérieurement, l'emboîtement présente une surface d'entrée tronconique 5 suivie d'un logement 6 dont la surface est convergente et se termine par une face d'extrémité avant 7 à peu près radiale.

Le joint comprend une garniture d'étanchéité 8 à compression axiale, un anneau de compression fermé 9, un dispositif de verrouillage 10, une contre-bride 11 et une série de boulons d'accrochage 12.

La garniture 8 est en élastomère. Lorsqu'elle est enfilée sur le bout mâle et en butée libre sur la surface 7 de l'emboîtement, un espace libre peut subsister entre sa surface périphérique et le logement 6, comme on le voit sur la Fig. 1.

L'anneau 9, dont le diamètre intérieur est supérieur au diamètre extérieur du bout uni, peut pénétrer avec un jeu radial notable dans l'emboîtement et présente une face avant, (c'est-à-dire tournée vers le fond de l'emboîtement) radiale 13 et une face arrière 14 également radiale.

Le dispositif de verrouillage 10 est une pièce composite réalisée par surmoulage et constituée d'une série d'inserts métalliques 15, constituant ensemble une couronne de verrouillage, noyés et adhérisés dans un collier 16 en élastomère. En variante, les inserts 15 pourraient être remplacés par une bague continue fendue, mais l'agencement à plusieurs inserts est préférable car il s'adapte mieux aux diverses configurations périphériques des tuyaux.

Chaque insert 15 est constitué par un bloc présentant une section trapézoïdale curviligne, avec une grande face radiale avant, une petite face radiale arrière, une face radialement extérieure 17 convergente vers l'arrière et bombée, et une face radialement intérieure de forme générale cylindrique ou plane mais pourvue d'une série de dents 18 d'accrochage sur le bout uni.

Le collier 16 comprend une partie avant cylindrique formant une lèvre élastique 19, intérieurement dentée, une partie arrière cylindrique 20, elle aussi intérieurement dentée, et un voile de liaison 21 constituant un revêtement de la face 17 des inserts. La partie arrière 20 comporte au droit de chaque insert, au voisinage de son extrémité libre, un orifice 22, et elle peut être limitée, à l'extérieur de la contre-bride, à une série de languettes axiales situées à ces emplacements. Le collier 16 enrobe les inserts 15 de tous côtés, sauf sur leur face intérieure dentée. Les parties cylindriques 19 et 20, qui sont surmoulées respectivement sur les faces radiales avant et arrière des inserts, permettent ainsi le maintien desdits inserts dans le dispositif de verrouillage 10, en cas notamment de défaut local d'adhérisation.

La contre-bride 11 est un corps annulaire délimité par deux faces radiales avant 23 et arrière 24 et par une surface radialement intérieure 25 convergente vers l'arrière et à peu près conjuguée de la surface 17 des inserts. Ce corps se prolonge, radialement vers l'extérieur, par un voile radial dans lequel sont ménagés une série de perçages axiaux 26, et ce voile est pourvu d'un rebord périphérique de protection 27 dirigé vers l'avant.

Le montage du joint ainsi décrit s'effectue comme suit, l'emboîtement étant en place.

On supposera tout d'abord que l'on se trouve dans la situation dite "jeux maximaux" illustrée à la Fig. 1, où, compte-tenu des tolérances de fonderie, les diamètres mâles sont minimaux, les diamètres femelles maximaux, et les cotes axiales sont maximales pour les éléments femelles et minimales pour les éléments mâles.

On enfile successivement sur le bout uni les pièces 11, 10, 9 et 8 avec la garniture à l'extrémité de ce bout uni et les autres pièces nettement décalées vers l'arrière. La garniture et le dispositif de verrouillage enserrent légèrement le bout uni.

On introduit ensuite le bout uni dans l'emboîtement. La garniture bute sur la face 7 de ce dernier, puis coulisse sur le bout uni jusqu'à ce que celui-ci ait atteint la position axiale désirée.

Puis on amène l'anneau 9 contre la garniture, on pousse le dispositif de verrouillage 10 vers l'avant jusqu'à ce que sa partie 19 bute contre l'anneau 9, ce qui est également aisé puisque ce dispositif est libre de toute compression radiale, et on amène la contre-bride jusqu'à contact de sa face 23 contre la face 14 de l'anneau 9.

Ensuite, les boulons 12, qui comportent à leur extrémité avant un bec excentrique 28, sont introduits dans les trous 26, et la contre-bride est serrée vers l'avant par vissage d'écrous 29 sur chaque boulon, les becs 28 prenant appui sur la collerette 3 de l'emboîtement et les écrous 29 sur la face arrière du voile de la contre-bride. Ce serrage, par l'intermédiaire de l'anneau 9, comprime axialement la garniture 8 et assure ainsi l'étanchéité du joint.

Du fait des jeux, la contre-bride n'entre pas en contact, à ce stade, avec le dispositif de verrouillage 10. Pour obtenir ce contact, on tire, vers l'arrière le dispositif de verrouillage jusqu'à son contact avec la contre-bride, comme indiqué en traits mixtes sur la Fig. 1, ceci au moyen d'une tige 30 introduite dans les trous 22, lesquels se trouvent à l'extérieur de la contre-bride, à l'arrière de celle-ci.

En variante, la lèvre 19 peut être suffisamment longue pour que la contre-bride arrive au contact du dispositif 10 par sa surface intérieure 25 avant que sa face 23 atteigne la face 14 de l'anneau 9. Dans ce cas, le serrage des boulons provoque en outre la compression radiale des inserts 15 sur le bout uni, et il n'est plus nécessaire que la partie arrière 20 du dispositif 10 dépasse de la contre-bride.

Dans la situation inverse dite "jeux minimaux", après avoir introduit le bout uni dans l'emboîtement, on introduit et on précomprime manuellement, par exemple au moyen d'un marteau, la garniture dans le logement 6, ce qui est aisé puisque l'entrée de l'emboîtement est entièrement dégagée. Lorsqu'on amène la contre-bride vers l'avant, celle-ci bute sur le voile 21 du dispositif 10, mais un jeu axial subsiste entre les faces 14 et 23. Puis on visse les écrous 29.

La lèvre 19 présente alors une raideur suffisante pour garantir l'application des inserts 15 contre la surface interne 25 de la contre-bride, mais suffisamment faible pour permettre l'avance de la contre-bride jusqu'au contact de l'anneau 9 sans comprimer substantiellement la garniture 8, ce déplacement de la contre-bride vers l'anneau 9 étant en outre rendu possible par le fait que le volume de matière élastomère défini par la lèvre 19 est suffisamment faible au regard du volume offert par la chambre d'expansion délimitée par la surface extérieure du bout uni, la face radiale avant des inserts, la surface interne 25 de la contre-bride et la face arrière 14 de l'anneau 9.

Ainsi, le serrage des boulons provoque dans un premier temps la venue en contact mutuel des faces 14 et 23 puis, dans un second temps, la compression axiale de la garniture 8 de manière à assurer l'étanchéité du joint.

Lors de la mise en pression de la canalisation, le bout uni recule d'une certaine distance x par rapport à l'emboîtement et entraîne dans ce mouvement les inserts, lesquels poussent la contre-bride vers l'arrière. Toutefois, la contre-bride ne peut reculer que très légèrement, dans la limite de sa rigidité et de celle des boulons 12. Ce recul y de la contre-bride par rapport à l'emboîtement est généralement très inférieur à x, par exemple de l'ordre de x/10. Par conséquent, l'anneau 9 ne peut reculer que de la distance y, de sorte que la compression de la garniture, et donc l'étanchéité du joint, est effectivement maintenue.

Il est à noter que les dents internes des parties 19 et 20 du dispositif de verrouillage améliorent l'étanchéité autour des inserts 15, et donc leur protection contre la corrosion, par création de chicanes d'étanchéité. Le voile 21, et un talon avant 21A, en saillie radiale, de ce voile, participent également à cette protection. L'ensemble de cette structure élastomère 19, 20, 21 et 21A assure ainsi l'étanchéité par rapport aux agents extérieurs, et le confinement des zones de contact des inserts avec les faces métalliques sur lesquelles ils s'appuient.

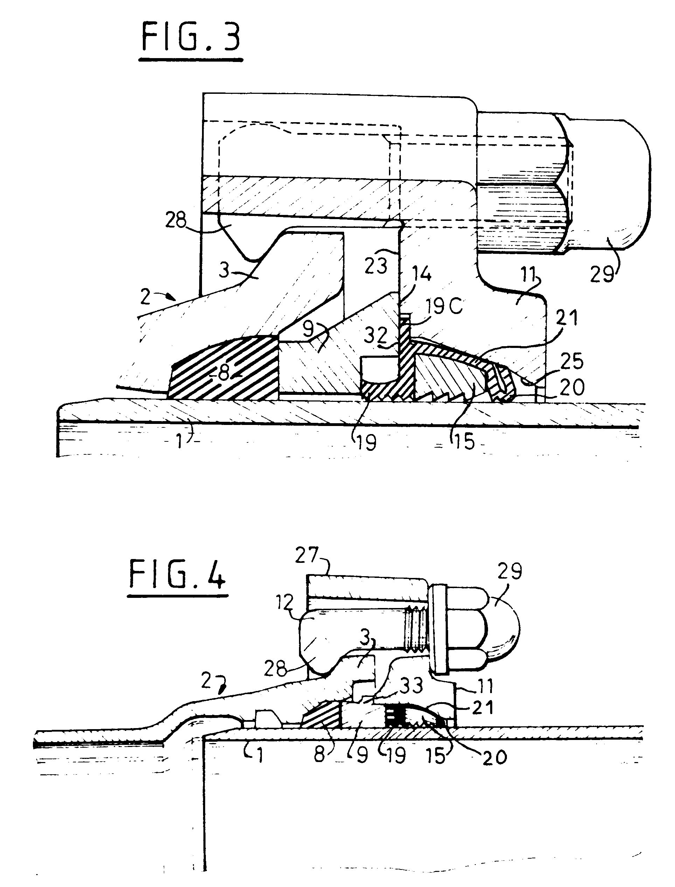

Pour renforcer la protection contre la corrosion des inserts 15, on peut faire appel à l'une ou l'autre des variantes des Fig. 2 et 3.

La variante représentée à la Fig. 2 ne diffère du joint de la Fig. 1 que par les points suivants : la partie avant 19 du dispositif de verrouillage pénètre dans un évidement annulaire 31 prévu dans la face arrière de l'anneau 9 et comporte deux lèvres divergentes : une lèvre intérieure 19A, qui s'applique sur le bout uni, et une lèvre extérieure 19B, qui s'applique élastiquement contre le fond de l'évidement 31. La lèvre 19A peut également, dans certaines conditions de montage, s'appliquer contre le fond de cet évidement. La partie arrière 20 du dispositif de verrouillage, quant à elle, est entièrement contenue dans la contre-bride et présente une conformation analogue à deux lèvres divergentes, à savoir une lèvre intérieure 20A appliquée sur le bout uni et une lèvre extérieure 20B s'appuyant élastiquement sur la surface interne 25 de la contre-bride.

La variante illustrée à la Fig. 3 ne diffère du joint de la Fig. 1 que par les points suivants : la face 23 de la contre-bride présente sur son bord intérieur un lamage annulaire 32 dans lequel est comprimé un voile radial 19C en saillie sur la lèvre élastique 19 du dispositif de verrouillage, et cette partie avant 19 est comprimée axialement contre le fond d'un évidement annulaire prévu dans l'anneau 9. De plus, la partie arrière 20 du dispositif de verrouillage, entièrement contenue dans la contre-bride, présente une configuration en U formant une lèvre qui s'applique élastiquement contre la surface intérieure 25 de la contre-bride.

La variante illustrée à la Fig. 4 ne diffère du joint de la Fig. 1 que par les points suivants : la partie avant 19 du dispositif de verrouillage de la Fig. 1 est ici constituée par un jonc circulaire à alvéoles axiaux, un tel jonc présentant, grâce à cette structure alvéolaire, une souplesse axiale importante. De plus, l'anneau 9 présente une section rectangulaire et, à mi-longueur, une collerette 33 en saillie radiale extérieure. Sa partie avant peut coulisser dans la partie arrière, de forme cylindrique, du logement 6 de l'emboîtement, et sa partie arrière reçoit à coulissement la partie avant, également cylindrique, de la surface intérieure 25 de la contre-bride, laquelle prend appui sur la collerette 33, cet agencement permettant ainsi de centrer l'anneau 9 par rapport au jonc 19 et par rapport à la garniture d'étanchéité 8.

Il résulte de la description qui précède que, dans tous les modes de réalisation des joints mécaniques suivant l'invention, on obtient simultanément les avantages suivants :
(1) pas d'effort d'emboîtage du bout uni dans l'emboîtement ;
(2) facilité de pose et de démontage, grâce à l'indépendance du dispositif à contre-bride par rapport au dispositif de verrouillage 10, avec un accès commode à la garniture d'étanchéité pour la précomprimer manuellement avant l'accrochage de la contre-bride lorsque cela est nécessaire ;
(3) maintien de l'étanchéité entre bout uni et emboîtement malgré le recul des inserts lors de la mise en pression de la canalisation, et ceci grâce au contact entre l'anneau de butée rigide et la contre-bride, ledit contact étant obtenu pour une large gamme de tolérances diamétrales sur les tuyaux assemblés et étant permis par le faible volume d'élastomère de la lèvre élastique 19 au regard de la chambre d'expansion environnante ;
(4) maintien à une très faible valeur du recul du bout uni, grâce au fait que, après le montage du joint et avant la mise en pression de la canalisation, on est certain de l'application des inserts 15 contre la surface 25 de la contre-bride, et donc de l'absence de jeu axial à ces emplacements, et ce pour de grandes tolérances diamétrales sur les tuyaux assemblés ; et
(5) protection anti-corrosion, et donc durabilité, de la zone de contact entre les inserts et les pièces métalliques qui les entourent grâce à l'étanchéité générée par le collier en élastomère 16, et plus particulièrement par les chicanes des parties avant et arrière dudit collier.

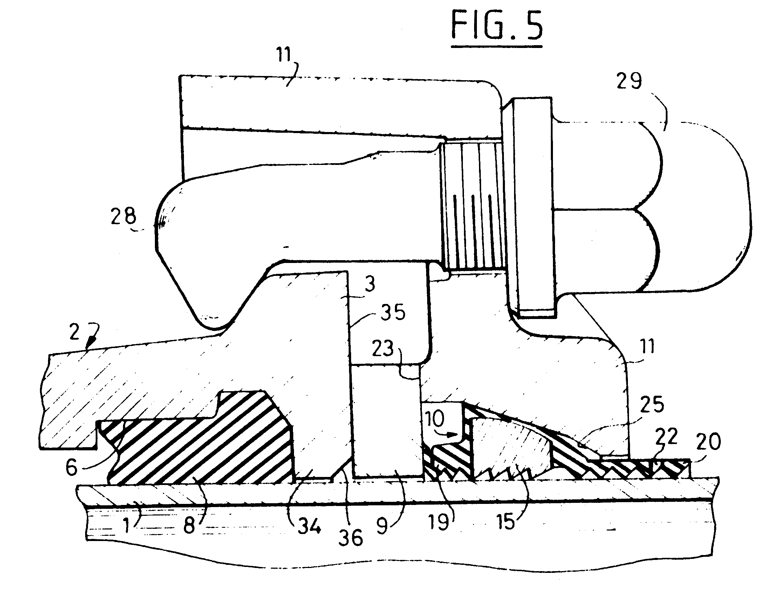

La Fig. 5 montre l'application de l'invention à un joint automatique, dans lequel le logement 6 de l'emboîtement 2 comporte une collerette d'entrée 34 prolongeant radialement vers l'intérieur la collerette 3 et définissant avec celle-ci une tranche d'extrémité plane 35 de l'emboîtement. La garniture 8 est comprimée radialement dans le logement 6 par la simple introduction du bout uni dans l'emboîtement.

Dans ce cas, le dispositif de verrouillage 10 est le même qu'à la Fig. 1, et les variantes des Fig. 2 à 4 peuvent être utilisées. En revanche, l'anneau 9 est un anneau-entretoise à section rectangulaire pris en sandwich entre les faces 35 de l'emboîtement et 23 de la contre-bride. Dans ce cas, l'anneau 9 sert essentiellement à fournir un appui à la lèvre élastique 19 du dispositif 10, alors que la collerette 34 comporte un chanfrein intérieur 36 pour faciliter l'introduction du bout uni dans l'emboîtement. Par conséquent, en variante, l'anneau 9 peut dans certains cas être supprimé, la contre-bride 11 et la partie 19 prenant alors directement appui sur l'emboîtement.

Dans une telle application, on est de nouveau certain que les inserts 15 s'appliquent sans jeu sur la surface 25 de la contre-bride avant la mise en pression de la canalisation, et que le recul du bout uni sera par suite minimal. De plus, comme précédemment, le montage et le démontage du joint sont très commodes.

## Revendications

1. Joint verrouillé entre le bout uni (1) d'un premier élément tubulaire et l'emboîtement (2) d'un second élément tubulaire, du type comprenant une garniture d'étanchéité (8) logée dans l'emboîtement, une couronne de verrouillage (15) à dents internes (18) entourant le bout uni, et un dispositif à contre-bride (9, 11) muni de moyens (12) d'accrochage sur l'emboîtement et adapté pour assurer la retenue anti-recul de la couronne de verrouillage, caractérisé en ce que un collier (16) en élastomère, surmoulé sur ladite couronne de verrouillage, enrobe celle-ci de tous côtés sauf sur sa face intérieure dentée, ledit collier comprenant, vers l'avant, au moins une lèvre élastique (19) qui est interposée, dans le sens longitudinal, entre la couronne de verrouillage (15) et la face arrière (14) d'un anneau de butée rigide (9) entourant le bout uni.

2. Joint verrouillé suivant la revendication 1, caractérisé en ce que le collier (16) se termine, vers l'arrière, par une partie arrière cylindrique (20) reliée à la lèvre élastique (19) par l'intermédiaire d'un voile de liaison (21) constituant un revêtement de la face radialement extérieure (17) de la couronne de verrouillage (15).

3. Joint verrouillé suivant la revendication 1 ou 2, caractérisé en ce que la lèvre élastique (19) et la partie arrière cylindrique (20) sont dentées intérieurement au contact du bout uni (1) et enserrent élastiquement celui-ci.

4. Joint verrouillé suivant l'une quelconque des revendications 1 à 3, caractérisé en ce que le collier (16) comprend, vers l'avant, deux lèvres élastiques divergentes (19A, 19B).

5. Joint verrouillé suivant l'une quelconque des revendications 1 à 4, caractérisé en ce que un voile radial (19C), en saillie sur la lèvre élastique (19), prolonge celle-ci en direction radiale extérieure.

6. Joint verrouillé suivant l'une quelconque des revendications 1 à 5, caractérisé en ce que la lèvre élastique (19) est un jonc en élastomère à alvéoles axiaux.

7. Joint verrouillé suivant l'une quelconque des revendications 1 à 6, caractérisé en ce que la partie arrière cylindrique du collier (16) constitue une protubérance de préhension (20) en saillie axiale au-delà de la contre-bride (11).

8. Joint verrouillé suivant l'une quelconque des revendications 1 à 7, à garniture d'étanchéité (8) à compression axiale, la compression axiale étant assurée par le dispositif à contre-bride (9, 11), caractérisé en ce que le dispositif à contre-bride comprend d'une part un anneau de compression (9) qui présente une face avant (13) s'appuyant sur la garniture (8) et une face arrière (14), cet anneau constituant ledit anneau de butée, et d'autre part une contre-bride (11) munie desdits moyens d'accrochage (12) et présentant une face avant de poussée (23) qui coopère avec la face arrière (14) de l'anneau de compression et une face interne (25) de retenue de la couronne de verrouillage (15) qui est convergente vers l'arrière.

9. Joint verrouillé suivant l'une quelconque des revendications 1 à 7, à garniture d'étanchéité (8) à compression radiale, la compression radiale étant assurée par l'insertion du bout uni (1) dans l'emboîtement (2), caractérisé en ce que ledit anneau de butée (9) est un anneau-entretoise pris en sandwich entre une face radiale (35) de l'emboîtement et la face avant (23) de la contre-bride (11).

## Claims

1. Locked joint between the plain end (1) of a first tubular element and the socket (2) of a second tubular element, of the type comprising a seal (8) housed in the socket, a locking ring (15) with internal teeth (18) surrounding the plain end, and a mating flange device (9, 11) equipped with means (12) for fastening onto the socket and adapted so as to retain the locking ring without recoil, characterised in that a collar (16) made from elastomer, overmoulded onto the said locking ring, encases the latter on all sides except on its toothed inner face, the said collar comprising, towards the front, at least one elastic lip (19) which is interposed, in the longitudinal direction, between the locking ring (15) and the rear face (14) of a rigid abutment annulus (9) surrounding the plain end.

2. Locked joint according to Claim 1, characterised in that the collar (16) is terminated, towards the rear, by a cylindrical rear part (20) connected to the elastic lip (19) by means of a thin linking web (21) constituting a coating for the radially external face (17) of the locking ring (15).

3. Locked joint according to Claim 1 or 2, characterised in that the elastic lip (19) and the rear cylindrical part (20) are internally toothed in contact with the plain end (1) and elastically clamp the latter.

4. Locked joint according to any one of Claims 1 to 3, characterised in that the collar (16) comprises, towards the front, two diverging elastic lips (19A, 19B).

5. Locked joint according to any one of Claims 1 to 4, characterised in that a radial thin web (19C), projecting over the elastic lip (19), extends the latter in the external radial direction.

6. Locked joint according to any one of Claims 1 to 5, characterised in that the elastic lip (19) is a retaining ring made from elastomer with axial cells.

7. Locked joint according to any one of Claims 1 to 6, characterised in that the cylindrical rear part of the collar (16) constitutes a gripping protuberance (20) projecting axially beyond the mating flange (11).

8. Locked joint according to any one of Claims 1 to 7, with an axial compression seal (8), the axial compression being provided by the mating flange device (9, 11), characterised in that the mating flange device comprises, on the one hand, a compression annulus (9) which has a front face (13) bearing on the packing (8) and a rear face (14), this annulus constituting the said abutment annulus, and, on the other hand, a mating flange (11) equipped with the said fastening means (12) and having a front thrust face (23) which interacts with the rear face (14) of the compression annulus and an internal face (25) for retaining the locking ring (15) which converges towards the rear.

9. Locked joint according to any one of Claims 1 to 7, with a radial compression seal (8), the radial compression being provided by the insertion of the plain end (1) in the socket (2), characterised in that the said abutment annulus (9) is a spacer-annulus sandwiched between a radial face (35) of the socket and the front face (23) of the mating flange (11).

## Patentansprüche

1. Verriegelte Verbindung zwischen dem glatten Ende (1) eines ersten rohrförmigen Elements und dem Einsteckabschnitt (2) eines zweiten rohrförmigen Elements, die aus einer in dem Einsteckabschnitt sitzenden Dichtung (8), einem Verriegelungskranz (15) mit Innenzähnen (18), die das glatte Ende umgeben, und einer Gegenflansch-Vorrichtung (9, 11), die mit Mitteln (12) zum Einhängen an dem Einsteckabschnitt versehen ist und geeignet ist, den Halt des Verriegelungskranzes gegen Zurückrutschen zu gewährleisten, besteht,
dadurch gekennzeichnet, daß eine auf den genannten Verriegelungskranz aufgeformte Elastomerringkappe (16) diesen von allen Seiten außer an dessen gezahnter Innenseite umschließt, wobei die genannte Ringkappe nach vorn mindestens eine elastische Lippe (9) aufweist, die in Längsrichtung zwischen dem Verriegelungskranz (15) und der Hinterseite (14) eines starren Anschlagrings (9), der das glatte Ende umgibt, angeordnet ist.

2. Verriegelte Verbindung nach Anspruch 1,
dadurch gekennzeichnet, daß die Ringkappe (16) nach hinten in einem zylindrischen Rückteil (20) endet, das mit der elastischen Lippe (19) über einen Verbindungsgürtel (21) verbunden ist, der eine Verkleidung der in radialer Richtung außen befindlichen Seite (17) des Verriegelungskranzes (15) bildet.

3. Verriegelte Verbindung nach Anspruch 1 oder 2,
dadurch gekennzeichnet, daß die elastische Lippe (19) und der zylindrische Rückteil (20) innen im Kontaktbereich mit dem glatten Ende (1) mit Zähnen versehen sind und dieses elastisch umschließen.

4. Verriegelte Verbindung nach einem der Ansprüche 1 bis 3,
dadurch gekennzeichnet, daß die Ringkappe (16) nach vorn zwei divergierende Lippen (19A, 19B) aufweist.

5. Verriegelte Verbindung nach einem der Ansprüche 1 bis 4,
dadurch gekennzeichnet, daß ein radial gerichteter Gürtel (19C), der über die elastische Lippe (19) hinausragt, diese in radialer Richtung nach außen fortsetzt.

6. Verriegelte Verbindung nach einem der Ansprüche 1 bis 5,
dadurch gekennzeichnet, daß die elastische Lippe (19) ein Elastomerring mit Zellen in Achsrichtung ist.

7. Verriegelte Verbindung nach einem der Ansprüche 1 bis 6,
dadurch gekennzeichnet, daß der zylindrische Rückteil der Ringkappe (16) eine Greifausbauchung (20) darstellt, die in Achsrichtung über den Gegenflansch (11) hinausragt.

8. Verriegelte Verbindung nach einem der Ansprüche 1 bis 7 mit Dichtung mit Druck in Achsrichtung, wobei der Druck in Achsrichtung durch die Gegenflansch-Vorrichtung gewährleistet wird,
dadurch gekennzeichnet, daß die Gegenflansch-Vorrichtung (9, 11) einerseits aus einem Druckring (9) besteht, der eine an der Dichtung (8) anliegende Vorderseite (13) und eine Rückseite (14) hat, wobei dieser Ring den genannten Anschlagring bildet, und andererseits aus einem Gegenflansch (11) besteht, der mit den genannten Mitteln zum Einhängen (12) versehen ist und eine Schub-Vorderseite (23) aufweist, die mit der Rückseite (14) des Druckrings zusammenwirkt, sowie eine Innenseite (25) zum Halten des Verriegelungskranzes (15) aufweist, die nach hinten konvergiert.

9. Verriegelte Verbindung nach einem der Ansprüche 1 bis 7 mit Dichtung (8) mit Druck in radialer Richtung, wobei der Druck in radialer Richtung durch das Einfügen des glatten Endes (1) in den Einsteckabschnitt (2) gewährleistet wird, dadurch gekennzeichnet, daß der Anschlagring (9) ein Zwischenring ist, der in Sandwich-Anordnung zwischen einer radial gerichteten Seite (35) des Einsteckabschnitts und der Vorderseite (23) des Gegenflanschs (11) sitzt.
